# FASCICULE DE BREVET EUROPEEN

(11) **EP 1 628 616 B1**
(45) Date de publication et mention de la délivrance du brevet: **26.08.2009**
(21) Numéro de dépôt: 04742727.3
(22) Date de dépôt: 13.05.2004
(51) Int. Cl.: A61G 5/06

(54) **VEHICULE ROULANT AUTOMOTEUR APTE A EVOLUER SUR SOL PLAT, TERRAIN ACCIDENTE ET ESCALIER**
MOTORISIERTES FAHRZEUG MIT RÄDERN ZUM FAHREN ÜBER EBENEN GRUND, UNEBENE FLÄCHEN UND AUF TREPPEN
POWERED WHEELED VEHICLE CAPABLE OF TRAVELLING ON LEVEL GROUND, OVER UNEVEN SURFACES AND ON STAIRS

(30) Priorité: 02.06.2003 FR 0306618
(43) Date de publication de la demande: 01.03.2006
(73) Titulaire: TopChair, 78100 Saint Germain en Laye (FR)
(72) Inventeur: LE MASNE DE CHERMONT, Hervé, F-81300 Graulhet (FR)
(74) Mandataire: de Saint-Palais, Arnaud Marie
(86) Numéro de dépôt international: PCT/FR2004/001178
(87) Numéro de publication internationale: WO 2004/108045

(56) Documents cités:
- WO-A-94/07452
- DE-A- 1 580 152
- US-A1- 2002 104 692
- PATENT ABSTRACTS OF JAPAN vol. 2003, no. 05, 12 mai 2003 (2003-05-12) & JP 2003 024391 A (HITACHI KOKUSAI ELECTRIC INC), 28 janvier 2003 (2003-01-28)

## Description

La présente invention concerne un véhicule roulant automoteur, apte à évoluer sur sol plat, terrain accidenté et escalier.

Elle s'applique notamment, mais non exclusivement, à la réalisation de sièges ou fauteuils roulants destinés à évoluer aussi bien à l'intérieur qu'à l'extérieur, ce siège ou fauteuil présentant sensiblement les mêmes fonctions et dimensions qu'un fauteuil roulant classique et étant en outre capable :
- de franchir des obstacles tels que, par exemple, des escaliers et des bordures de trottoir,
- d'évoluer en terrain difficile, par exemple des sols meubles, sableux
ou pierreux, voire même des sols mous.

Dans ce type d'application, elle a plus particulièrement pour but de rendre une part importante de liberté de mouvement à des personnes ayant des difficultés de motricité (handicapés, personnes âgées) de manière à améliorer leur autonomie et à leur ouvrir de nouvelles possibilités notamment en matière :
- d'insertion professionnelle,
- de maintien à domicile,
- de participation à la vie familiale, sociale et associative.

Les fauteuils roulants motorisés actuellement commercialisés ne permettent pas, pour la plupart, d'évoluer sur des sols accidentés, meubles ou inclinés ; dans leur quasi-totalité, ils ne permettent même pas de monter sur une bordure de trottoir et, a fortiori, d'emprunter un escalier.

Néanmoins, de nombreuses solutions ont été proposées pour tenter de remédier à ce problème de mobilité sur terrain accidenté et notamment de franchissement d'escalier.

En effet, les solutions proposées concernent essentiellement cinq familles de dispositifs :
- ceux utilisant des chenillettes motrices simples, articulées ou multiples,
- ceux utilisant des roues motrices, par paire, multiples, ou principales associées à des galets,
- ceux utilisant des systèmes mixtes, chenillettes et roues motrices, tels que des chenillettes motrices simples ou multiples et des roues libres, des chenillettes motrices et des roues motrices (voir WO-A-9407452),
- ceux utilisant des châssis à chenillettes transportant les fauteuils roulants non motorisés,
- ceux utilisant des systèmes comportant des roues motrices associées à des barres d'appui.

Hormis certaines solutions proposées qui ont fait l'objet de réalisations commercialisées, la plupart d'entre elles n'ont pas abouties, pour des raisons d'encombrement, de sécurité, de complexité de construction ou de coût de mise en oeuvre, et notamment à cause d'un contrôle non satisfaisant de la transition entre les marches de l'escalier et le sol en amont ou en aval dudit escalier, ou de la transition de même nature entre la bordure de trottoir et le sol en amont ou en aval de ladite bordure.

L'invention a donc plus particulièrement pour but de résoudre ces problèmes et de supprimer ces inconvénients en contrôlant en temps réel la transition entre un rebord (rebord de trottoir ou autre) ou une marche (première marche ou dernière marche d'un escalier), et le sol en amont ou en aval dudit rebord ou de ladite marche.

Ladite transition étant le profil limite entre deux surfaces planes, le contrôle en temps réel d'une telle transition peut bien évidemment s'appliquer aux sols accidentés (pierreux ou autres).

A cet effet, l'invention comme revendiquée propose un véhicule roulant automoteur, apte à rouler aussi bien sur sol plat que sur terrain accidenté, comprenant au moins une bande de roulement motrice ainsi que deux couples de roues avant et arrière dont au moins l'un est moteur, chacune de ces roues du couple moteur étant montée sur un bras oscillant pouvant basculer autour d'un axe parallèle à l'axe de la roue et perpendiculaire à l'axe longitudinal de la bande de roulement, chacun des bras oscillants des roues du susdit couple moteur est solidaire d'un actionneur conçu de manière à disposer lesdites roues dans une position basse dans laquelle l'aire d'appui des roues est située au-dessous de l'aire d'appui des bandes de roulement de sorte que les roues à elles seules assurent la motricité dudit véhicule roulant, et une position haute dans laquelle l'aire d'appui des roues demeure en contact avec le sol de manière à ce que la motricité du véhicule résulte de la combinaison des effets de la bande de roulement et desdites roues motrices. Ledit véhicule comprend de plus un automate prenant en compte des informations issues de capteurs de position, de proximité et d'inclinaison.

Cette solution permet notamment de garantir une vitesse de déplacement quasiment continue durant le franchissement de la transition constituée d'un rebord et d'un sol en amont ou en aval dudit rebord, de la transition entre la première marche ou la dernière marche d'un escalier et le sol associé à ladite marche, ou de la transition d'une marche à la marche suivante d'un escalier.

Un mode d'exécution de l'invention sera décrit ci-après, à titre d'exemple non limitatif, avec référence aux dessins annexés dans lesquels :
La figure 1 représente une vue en perspective du véhicule, se déplaçant sur un sol horizontal, en position de motricité sur roues ;
La figure 2 représente une vue en perspective du véhicule, se déplaçant sur un sol incliné, en position de motricité sur bandes de roulement ;
La figure 3 représente la position respective des roues avant et arrière et de la bande de roulement lors du déplacement sur roues ;
La figure 4 représente la position respective des roues avant et arrière et de la bande de roulement lors du déplacement sur bande de roulement ;
La figure 5 représente la position respective des roues avant et arrière et de la bande de roulement lors du déplacement sur roues en situation surélevée ;
Les figures 6a, 6b représentent la position respective des roues avant et arrière et de la bande de roulement lors de la montée des premières marches d'un escalier ;
La figure 7 représente la position respective des roues avant et arrière et de la bande de roulement lors de la montée ou de la descente d'un escalier ;
La figure 8 représente la position respective des roues avant et arrière et de la bande de roulement lors de la montée des dernières marches d'un escalier ;
Les figures 9a, 9b représentent la position respective des roues avant et arrière et de la bande de roulement lors de la descente des premières marches d'un escalier ;
Les figures 10a, 10b, représentent la position respective des roues avant et arrière et de la bande de roulement lors de la descente des dernières marches d'un escalier ;
La figure 11 représente la position respective des roues avant et arrière et de la bande de roulement lors du franchissement d'un obstacle de faible hauteur; et
La figure 12 représente le schéma synoptique de l'asservissement en position du siège 12.

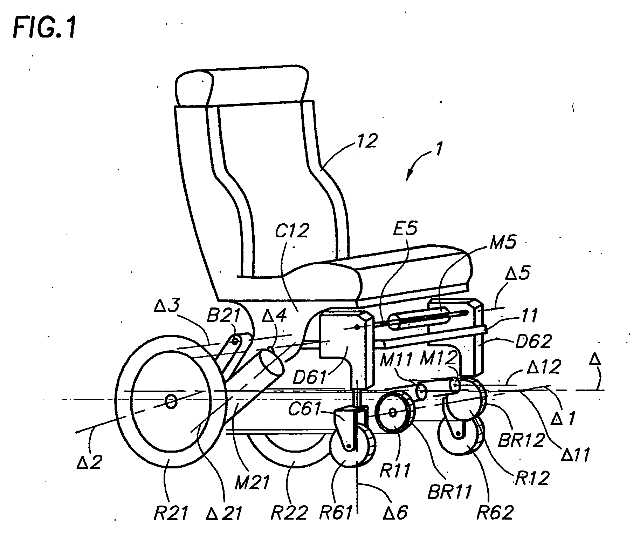

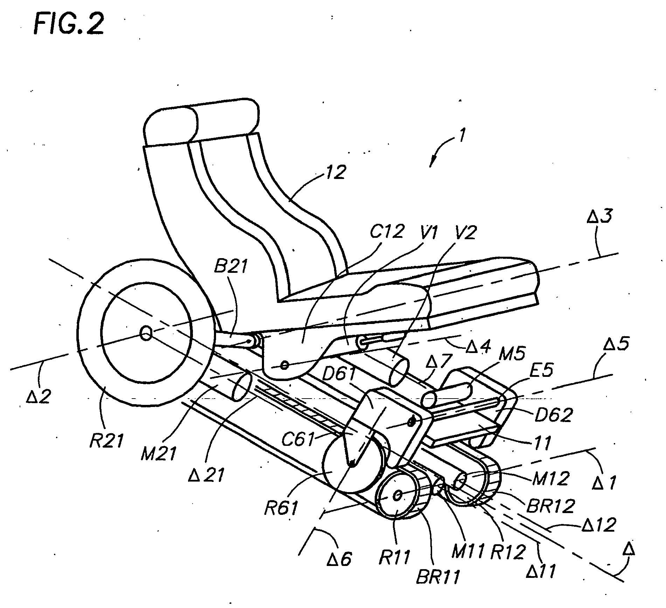

Les références des différents éléments constituant le véhicule automoteur sont identiques sur les différentes figures 1 à 11 ; les figures 1 et 2, représentant le véhicule en perspective, comportent la totalité des références ; néanmoins certaines sont visibles sur la figure 2 et non sur la figure 1, et réciproquement.

Comme indiqué sur les figures 1 et 2, le véhicule 1 est constitué d'une plateforme 11 supportant le siège 12 et l'ensemble des organes mécaniques de locomotion ; ne sont pas représentés les organes conventionnes pour ce type de véhicule, à savoir le pupitre de pilotage, les batteries d'alimentation électrique ainsi que le module électronique associé à des capteurs.

Les organes de locomotion comprennent :
- deux bandes de roulement BR11 et BR12 situées de part et d'autre d'un axe longitudinal Δ ; les dites bandes de roulement sont supportées par des galets R11, R12 à l'avant du véhicule et des galets R11', R12' (non représentés sur les figures 1, 2) à l'arrière du véhicule ; les susdits galets avant sont montés rotatifs autour d'un axe Δ1, perpendiculaire à l'axe longitudinal Δ, dans un plan parallèle au plan défini par la plateforme 11 ; il en est de même des susdits galets arrière, pivotants autour d'un axe Δ1' (non représenté), perpendiculaire à l'axe longitudinal Δ, dans un plan parallèle au plan défini par la plateforme 11 ; la distance entre lesdits axes Δ1 et Δ1' est réglable de manière à permettre la modification de la longueur d'appui des susdites bandes de roulement BR11, BR12 ; la motorisation de la bande de roulement BR11, supportée par les galets R11, R11', est assurée par un moto-réducteur électrique M11 ; de même, la motorisation de la bande de roulement BR12, supportée par les galets R12, R12', est assurée par un moto-réducteur électrique M12 ; ces deux moto-réducteurs, solidaires de la plateforme 11, sont disposés de part et d'autre de l'axe longitudinal Δ, selon des axes, respectivement Δ11 Δ12, parallèles à l'axe longitudinal Δ ;
- un couple de roues arrière motrices R21 et R22, montées rotatives autour d'un axe Δ2, perpendiculaire à l'axe longitudinal A, dans un plan parallèle au plan défini par la plateforme 11 ; chacune des roues R21, R22 est motorisée par l'intermédiaire de moto-réducteurs électriques, respectivement M21, M22, disposés dans l'intervalle constitué par la roue motrice et la bande de roulement adjacente ; par ailleurs, un moyeu de la roue R21 (non représenté), auquel est associé le moto-réducteur M21, est solidaire d'un bras oscillant B21 ; lequel bras R21 est monté oscillant autour d'un axe Δ3, perpendiculaire à l'axe longitudinal A, dans un plan parallèle à celui défini par la plateforme 11 ; il en est de même pour la roue R22 dont le moyeu est associé à un moto-réducteur M22, solidaire d'un bras oscillant B22, monté oscillant autour de l'axe Δ3 ; les éléments R22, M22, B22 ne sont pas représentés; le mouvement des bras oscillants B21, B22, est assuré par un vérin électrique V2, solidaire de la plateforme 11, situé selon un axe Δ7, parallèle à l'axe longitudinal Δ ;
- un couple de roues avant R61 et R62, montées rotatives autour d'un axe horizontal, contenu dans un plan parallèle au plan défini par la plateforme 11 ; chacune des roues R61, R62, est supportée par une chape, respectivement C61, C62 (non représentée), lesquelles chapes sont montées pivotantes autour d'un axe perpendiculaire au plan défini par la plateforme 11, à savoir respectivement Δ6, Δ6' (non représenté) ; par ailleurs, chacune des chapes C61, C62, est solidaire d'un dispositif, respectivement D61, D62, associé à la plateforme 11, permettant au moyen d'un arbre d'entraînement E5 et d'un moto-réducteur électrique M5, de mouvoir les susdites chapes C61, C62 de telle manière que leur axe respectif Δ6, Δ6 se déplacent dans un plan perpendiculaire à la plateforme 11, et avantageusement maintenus perpendiculaires à ladite plateforme, de part et d'autre de l'axe longitudinal Δ ; l'arbre d'entraînement E5 est monté pivotant autour d'un axe Δ5, perpendiculaire à l'axe longitudinal Δ, dans un plan parallèle au plan défini par la plateforme 11.

Le siège 12 est solidaire de la plateforme 11 par l'intermédiaire d'une chape C12, permettant à l'ensemble, siège 12 et chape C12, de pivoter autour d'un axe Δ4, perpendiculaire à l'axe longitudinal A, dans un plan parallèle au plan défini par la plateforme 11 ; le mouvement de pivotement de l'ensemble, siège 12 et chape C12, est assuré par un vérin électrique V1, solidaire, d'une part, de la plateforme 11, par l'intermédiaire d'une articulation non représentée et, d'autre part, de la chape C12, par l'intermédiaire d'une autre articulation non représentée.

Comme indiqué sur la figure 1, le véhicule 1 se déplaçant sur un sol horizontal, en position de motricité sur roues, les susdites roues arrière motrices R21, R22 et les susdites roues avant R61, R62 sont disposées en contact avec le sol, les susdites bandes de roulement BR11, BR12 sont disposées distantes du sol.

Comme indiqué sur la figure 2, le véhicule 1 se déplaçant sur un sol incliné, en position de motricité sur bandes de roulement, les susdites bandes de roulement BR11, BR12 sont disposées en contact avec le sol, les susdites roues arrière motrices R21, R22 et les susdites roues avant R61, R62 sont disposées distantes du sol.

Les figures suivants 3-11 sont des représentations schématiques des positions respectives des roues avant et arrière, et de la bande de roulement selon différentes configurations du sol ; sont indiqués dans la plupart des figures, le siège 12, l'axe longitudinal Δ, la bande de roulement BR11 supportée par les galets R11, R11', la roue arrière R21, la roue avant R61, le bras B21 oscillant autour de l'axe Δ3, le sol étant référencé par le symbole S.

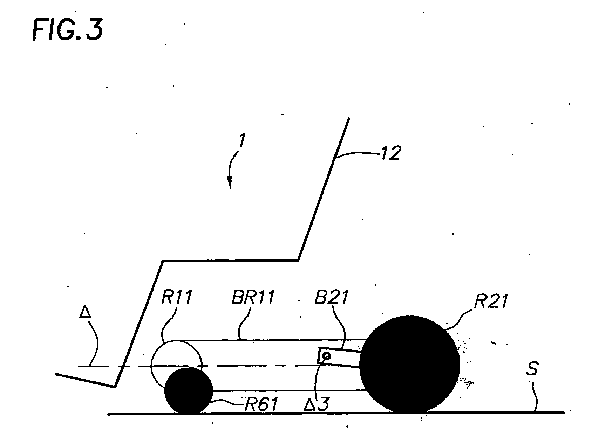

En position de motricité sur roues, comme indiqué sur la figure 3, les roues arrière R21 et avant R61 sont en position basse et prennent appui sur le sol horizontal S ; ainsi, la bande de roulement BR11, supportée par les galets R11, R11', est distante du sol horizontal S.
Le siège 12 est disposé de telle manière que la surface d'assise est située dans un plan parallèle au sol S.
A titre indicatif, la surface d'appui de la bande de roulement BR11 est à une distance du sol S de 10 cm ; la surface d'assise du siège 12 est à une distance du sol S de 54 cm.

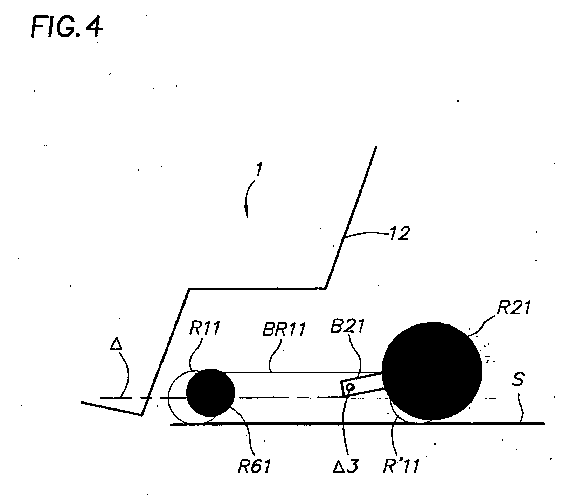

En position de motricité sur bandes de roulement, comme indiqué sur la figure 4, la bande de roulement BR11, supportée par les galets R11, R11', prend appui sur le sol S ; ainsi, les roues arrière R21 et avant R61 sont en position haute et sont distantes du sol horizontal S.
Le siège 12 est disposé de telle manière que la surface d'assise est située dans un plan parallèle au sol S.
A titre indicatif, les surfaces d'appui des roues arrière R21 et avant R61 sont à une distance du sol S de 4 cm ; la surface d'assise du siège 12 est à une distance du sol S de 44 cm.

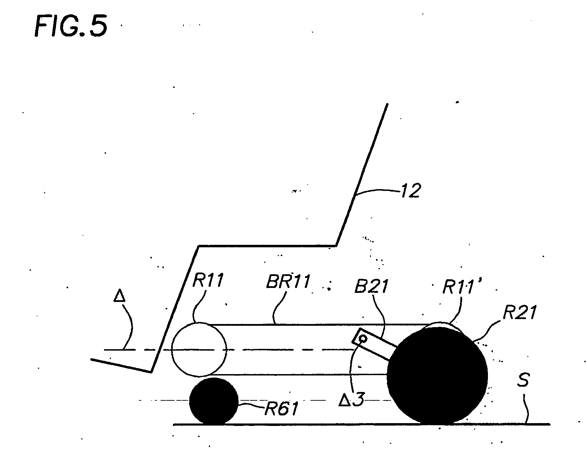

En position surélevée de motricité sur roues, comme indiqué sur la figure 5, les roues arrière R21 et avant R61 sont en position très basse et prennent appui sur le sol horizontal S ; ainsi, la bande de roulement BR11, supportée par les galets R11, R11', est particulièrement distante du sol horizontal S.
Le siège 12 est disposé de telle manière que la surface d'assise est située dans un plan parallèle au sol S.

A titre indicatif, la surface d'appui de la bande de roulement BR11 est à une distance du sol S supérieure à 16 cm ; la surface d'assise du siège 12 est à une distance du sol S supérieure à 60 cm.
Cette position dite surélevée permet de réduire l'empattement entre la roue avant R61 et la roue arrière R21 et rend ainsi le véhicule plus maniable étant donné que le rayon de giration est plus faible.

D'une manière générale, le franchissement d'un escalier s'effectue en marche arrière pour le gravir, et en marche avant pour le descendre, le véhicule étant conçu de manière à ce que la projection verticale du centre de gravité de l'ensemble, constitué de la personne assise sur le véhicule et du véhicule lui-même, soit contenue dans la surface d'appui dudit véhicule sur les marches de l'escalier, définie comme étant la surface inscrite dans un contour, lequel contour est déterminé d'une part par les limites externes des bandes de roulement et les génératrices amont et aval définies par les rebords de marche.

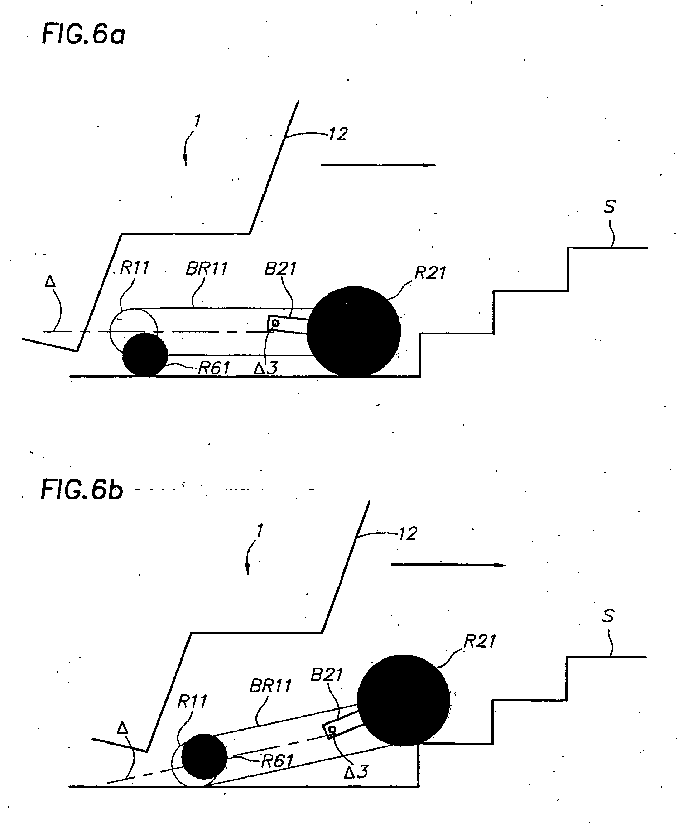

Lors de la montée d'un escalier, la transition entre un sol horizontal et la première marche d'un escalier, s'effectuant en marche arrière comme indiqué sur les figures 6a, 6b, est réalisée selon les étapes suivantes :
- positionnement du véhicule en butée contre la première marche,
- remontée des roues avant R61 et arrière R21,
- mise en appui sur le sol de la bande de roulement BR11,
- mise en appui de la roue arrière R21 avec le plan horizontal de la première marche,
- mise en marche simultanée de la bande de roulement BR11 et de la roue arrière R21.

Il est à noter que la surface d'appui de la roue arrière R21, en position haute, tangente la surface d'appui définie par la bande de roulement BR11, de manière à coopérer au mouvement de franchissement de la première marche de l'escalier.

Par ailleurs, le siège 12 bascule progressivement en arrière sous l'action du vérin V1, de manière à maintenir la surface d'assise du siège 12 dans un plan horizontal.
La séquence des opérations, citée précédemment, peut être effectuée manuellement par la personne utilisatrice du véhicule, ou avantageusement grâce à un automate prenant en compte des informations issues de capteurs de position, de proximité et d'inclinaison, et agissant sur les moto-réducteurs M21, M22 actionnant les roues arrière R21, R22, sur les moto-réducteurs M11, M12, actionnant les bandes de roulement BR11, BR12, sur le vérin V2 actionnant les bras B21, B22, sur le moto-réducteur M5 actionnant le mouvement de translation des roues avant R61, R62, et sur le vérin électrique V1 actionnant le siège 12.

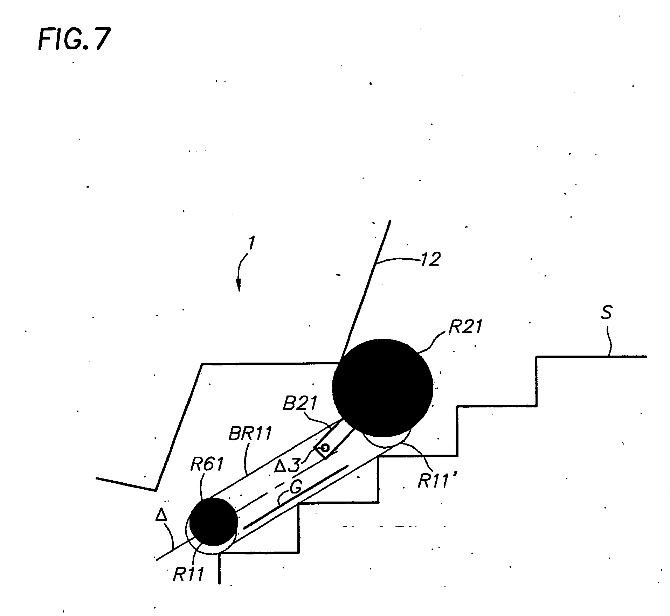

Le franchissement d'un escalier est effectué, comme indiqué précédemment, en marche arrière pour le gravir et en marche avant pour le descendre.
Dans ce cas, la locomotion du véhicule est effectuée grâce aux bandes de roulement, comme indiqué sur la figure 7.

Les roues arrière R21 et avant R61 sont soulevées de manière à ce que la bande de roulement BR11, supportée par les galets R11, R11', puisse prendre appui sur les marches de l'escalier au niveau des rebords des dites marches.
Il est à noter que la distance qui sépare lesdits galets R11, R11' est telle que la bande de roulement soit en général en appui sur au moins trois rebords de marche consécutifs ; ceci de manière à permettre un déplacement du véhicule sans à-coups ; l'implantation de glissières (G), le long des bandes de roulement, disposées parallèlement à la surface d'appui, du côté opposé à ladite surface d'appui, contribuera à l'uniformisation du mouvement de translation du véhicule ; de même, le positionnement de la roue arrière R21 de telle manière qu'elle prenne appui tangentiellement au rebord de marche, lors de son franchissement, contribuera également à l'uniformisation du mouvement de translation du véhicule.

Par ailleurs, le siège 12 sera basculé en arrière sous l'action du vérin V1, de manière à maintenir la surface d'assise du siège 12 dans un plan horizontal.
La séquence des opérations, citée précédemment, peut être effectuée manuellement par la personne utilisatrice du véhicule, ou avantageusement grâce à l'automate prenant en compte les informations issues des capteurs et agissant sur les différents moto-réducteurs et vérins définis précédemment.

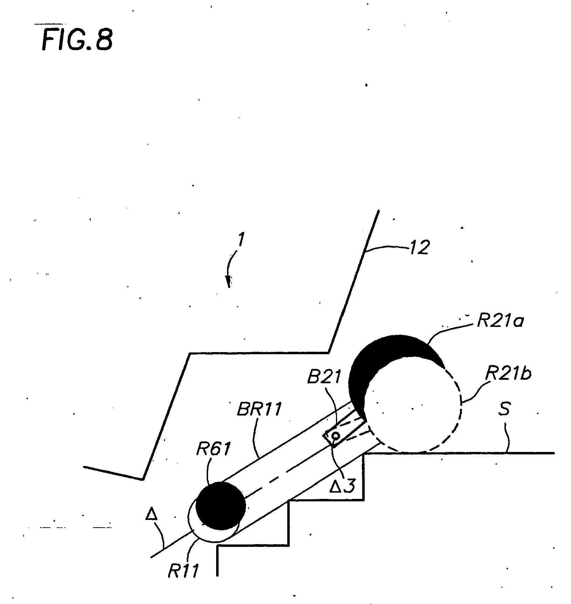

Lors de la montée des dernières marches, comme indiqué sur la figure 8, le nombre de rebords de marche, sur lesquels prend appui la bande de roulement BR11, diminuant, la roue arrière R21 est progressivement rabaissée de manière à prendre appui sur le sol S constituant le plan horizontal supérieur de la dernière marche.

Ainsi, le basculement du véhicule vers l'arrière, lors du franchissement du dernier rebord ou de l'avant dernier rebord de marche est évité ; la continuité du mouvement de translation du véhicule est assurée.

La roue arrière R21, devenant motrice, contribuera à la motricité engendrée par la bande de roulement BR11.

Par ailleurs, le siège 12 bascule progressivement vers l'avant sous l'action du vérin V1, de manière à maintenir la surface d'assise du siège 12 dans un plan horizontal.

La séquence des opérations, citée précédemment, peut être effectuée manuellement par la personne utilisatrice du véhicule, ou avantageusement grâce à l'automate prenant en compte les informations issues des capteurs et agissant sur les différents moto-réducteurs et vérins définis précédemment.

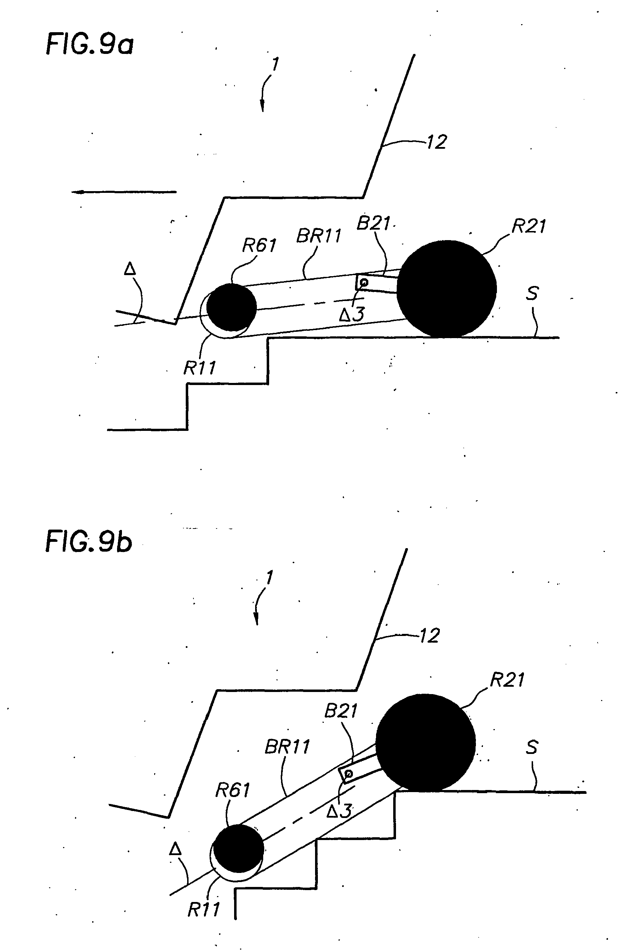

Lors de la descente d'un escalier, la transition entre un sol horizontal et la première marche d'un escalier, s'effectuant en marche avant comme indiqué sur les figures 9a, 9b, est réalisée selon les étapes suivantes :
- positionnement du véhicule au niveau du rebord de la première marche,
- remontée de la roue avant R61,
- mise en appui sur le sol de la bande de roulement BR11,
- mise en appui de la roue arrière R21 avec le plan horizontal du sol correspondant à la surface supérieure de la première marche,
- mise en marche de la bande de roulement BR11 et, éventuellement, de la roue arrière R21.

Il est à noter que la surface d'appui de la roue arrière R21, en position haute, tangente la surface d'appui définie par la bande de roulement BR11, de manière à coopérer au mouvement de franchissement des premières marches de l'escalier.

Par ailleurs, le siège 12 bascule progressivement en arrière sous l'action du vérin V1, de manière à maintenir la surface d'assise du siège 12 dans un plan horizontal.

La séquence des opérations, citée précédemment, peut être effectuée manuellement par la personne utilisatrice du véhicule, ou avantageusement grâce à un automate prenant en compte les informations issues des capteurs et agissant sur les moto-réducteurs et vérins définis précédemment.

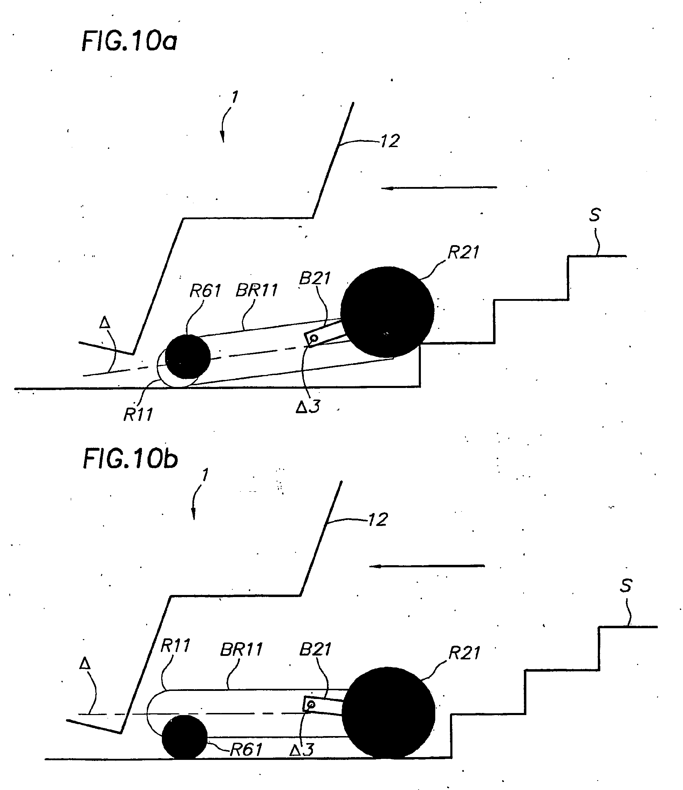

Lors de la descente d'un escalier, la transition entre la dernière marche d'un escalier et le sol, s'effectuant en marche avant comme indiqué sur les figures 10a, 10b, est réalisée selon les étapes suivantes :
- mise en appui sur le sol horizontal S de la bande de roulement BR11,
- mise en appui de la roue arrière R21 sur le plan horizontal correspondant à la surface supérieure de la dernière marche puis du sol horizontal S,
- abaissement de la roue avant R61 pour prendre appui sur le sol horizontal S,
- arrêt de l'entraînement de la bande de roulement,
- mise en marche de la roue arrière R21.
   Il est à noter que la roue arrière R21, en position haute, prend appui sur le rebord de la dernière marche puis progressivement vient en appui sur le sol, de manière à coopérer au mouvement de franchissement des dernières marches de l'escalier.

Par ailleurs, le siège 12 bascule progressivement en arrière sous l'action du vérin V1, de manière à maintenir la surface d'assise du siège 12 dans un plan horizontal.

La séquence des opérations, citée précédemment, peut être effectuée manuellement par la personne utilisatrice du véhicule, ou avantageusement grâce à un automate prenant en compte les informations issues des capteurs et agissant sur les moto-réducteurs et vérins définis précédemment.

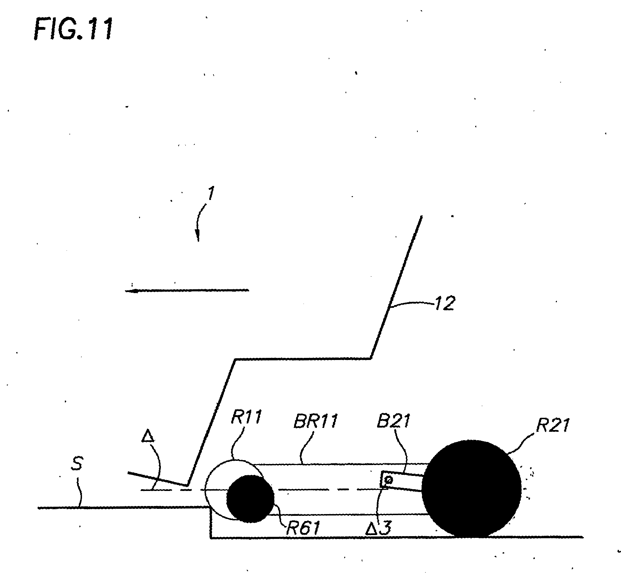

Lors du franchissement d'un obstacle de faible hauteur, tel une marche unique ou un rebord de trottoir, la transition entre le sol en amont et le sol en aval dudit obstacle, s'effectuant en marche avant comme indiqué sur la figure 11, est réalisée selon les étapes suivantes :
- positionnement du véhicule au niveau de l'obstacle,
- remontée de la roue avant R61,
- mise en appui sur le sol horizontal S, en amont de l'obstacle, de la bande de roulement BR11,
- entraînement de la bande de roulement BR11,
- franchissement de l'obstacle grâce à la motricité de la bande de roulement BR11
- mise en appui de la bande de roulement BR11 sur le sol horizontal S, en aval de l'obstacle,
- mise en appui de la roue arrière R21 sur le sol horizontal S, en aval de l'obstacle,
- abaissement de la roue avant R61 pour prendre appui sur le sol horizontal S, en aval de l'obstacle,
- arrêt de l'entraînement de la bande de roulement BR11,
- mise en marche de la roue arrière R21.
   Il est à noter que la roue arrière R21, en position basse, prend appui sur le sol horizontal S, en amont de l'obstacle, puis progressivement vient en appui sur le sol horizontal S, en aval de l'obstacle, de manière à coopérer au mouvement de franchissement de l'obstacle.

Par ailleurs, le siège 12 peut éventuellement osciller autour de l'axe Δ4 sous l'action du vérin V1, de manière à maintenir la surface d'assise du siège 12 dans un plan horizontal, durant le franchissement de l'obstacle.

La séquence des opérations, citée précédemment, peut être effectuée manuellement par la personne utilisatrice du véhicule, ou avantageusement grâce à un automate prenant en compte les informations issues des capteurs et agissant sur les moto-réducteurs et vérins définis précédemment.

Le franchissement de la transition entre marches d'un escalier et le sol en amont ou en aval dudit escalier, la descente ou la montée du dit escalier, ou le franchissement d'un obstacle de faible hauteur, effectué tantôt en marche avant, tantôt en marche arrière, nécessite le respect des étapes définies précédemment.

Comme indiqué ci-dessus, les opérations d'abaissement ou de relèvement des roues avant R61 et arrière R21, la mise en marche ou l'arrêt de l'entraînement de la bande de roulement BR11 et de la roue arrière R21, la commande du vérin V1 du siège 12, peuvent être effectuées manuellement par la personne utilisatrice du véhicule ou avantageusement par l'intermédiaire d'un automate asservissant les organes moteurs en fonction d'ordres élémentaires délivrés par l'utilisateur du véhicule et des informations issues de capteurs appropriés.

En effet, l'utilisateur du véhicule pourra disposer d'un pupitre de commande comportant :
- d'une part, les organes conventionnels associés à ce type de véhicule roulant automoteur, à savoir :
   - un manche à trois degrés de liberté permettant d'avancer, de reculer, de tourner à gauche ou à droite, d'accélérer ou de ralentir,
   - un interrupteur général marche/arrêt,
   - un indicateur de charge de batterie,
   - un indicateur de vitesse de déplacement,
- d'autre part, des organes spécifiques au véhicule, selon l'invention, à savoir :
   - un module de puissance pour commander les moto-réducteurs M11, M12 d'entraînement des bandes de roulement BR11, BR12,
   - un module de puissance pour commander le vérin V2 d'entraînement des bras B21, B22,
   - un module de puissance pour commander le moto-réducteur M5 de déplacement des roues avant R61, R62,
   - un module de puissance pour commander le vérin V1 de déplacement du siège 12,
   - une pluralité de capteurs de proximité, de distance au sol, d'inclinaison de la plateforme, et de position des roues par rapport à la plateforme,
   - un commutateur de choix de fonctions automatisées : "montée escalier", "descente escalier", "sol plat", "sol pierreux", "obstacle", "arrêt d'urgence",
   - un calculateur prenant en compte la fonction choisie par l'utilisateur du véhicule et les informations issues des différents capteurs et pilotant en temps réel les différents modules de puissance cités précédemment.

Selon une variante de l'invention, le pupitre de commande pourra comporter le commutateur de choix de fonctions automatisées ("montée escalier", "descente escalier", "sol plat", "sol pierreux", "obstacle", "arrêt d'urgence"), et/ou une pluralité d'organes de commande manuelle des modules de puissance (moto-réducteurs M11, M12, M5 et vérins V1, V2).

Selon une autre variante de l'invention, l'asservissement en position horizontale du siège 12, selon l'axe longitudinal Δ, pourra être effectué automatiquement en référence à un capteur d'inclinaison, fixé au siège.

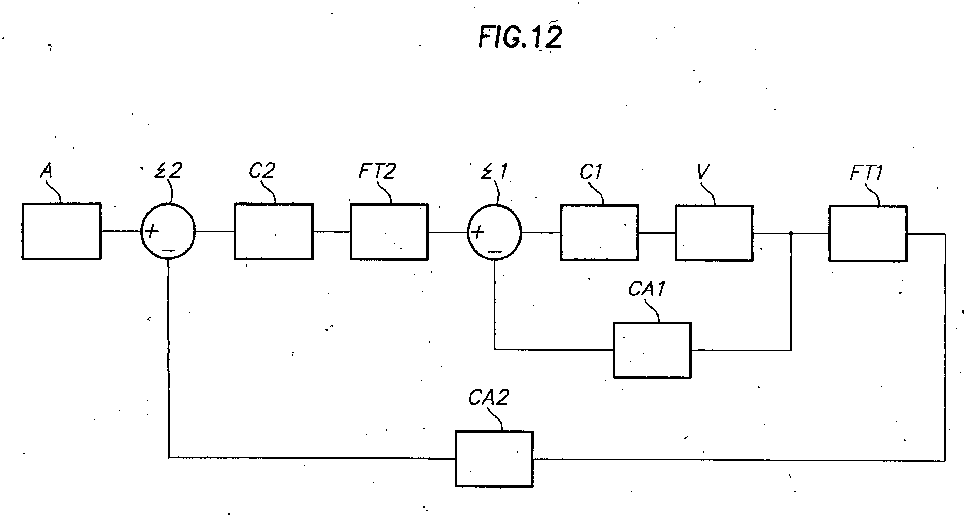

En effet, comme indiqué sur la figure 12, l'asservissement en position horizontale de siège 12, pourra comprendre :
- une première boucle d'asservissement du vérin comprenant dans l'ordre : le vérin V1, un capteur incrémental d'élongation du vérin CA1, un correcteur, de type PID (proportionnelle, intégrale, dérivée) C1, et un sommateur Σ1,
- une seconde boucle d'asservissement du vérin V1 comprenant dans l'ordre, en sortie de ladite première boucle : un module de fonction de transfert FT1, un capteur d'inclinaison CA2, un sommateur Σ2, un correcteur de type PID C2 et un module de fonction de transfert FT2 dont la sortie est reliée à l'entrée du sommateur Σ1 de la première boucle,
- un afficheur de consigne d'inclinaison A connecté à l'entrée du sommateur Σ2 de ladite seconde boucle d'asservissement.

La première boucle permet s'asservir la position du vérin V1, quelle que soit la variation de l'effort appliqué sur ledit vérin, c'est-à-dire quel que soit le poids de l'utilisateur du véhicule ; le correcteur de type PID C1 permet d'éviter des dépassements de course du vérin autour de la position d'asservissement.

La seconde boucle, contenant la première boucle et le capteur d'inclinaison, permet d'asservir la position du siège 12 en fonction de l'inclinaison dudit siège et de la course du vérin V1 ; le second correcteur de type PID C2 permet d'éviter des dépassements de course autour du point de consigne défini par l'afficheur A ; le dit afficheur de consigne A permet de définir l'inclinaison du siège, c'est-à-dire 0° ou éventuellement une autre valeur pour des raisons de confort; les modules de fonction de transfert FT1, FT2, convertissent respectivement les données "déplacement linéaire" en données "déplacement angulaire", et les données "déplacement angulaire" en données "déplacement linéaire".

Selon une autre variante de l'invention, l'asservissement en position horizontale du siège 12 pourra être effectué automatiquement en référence à un capteur d'inclinaison, de manière à maintenir ledit siège 12 horizontal selon un axe transversal, perpendiculaire à l'axe longitudinal Δ ; l'asservissement, décrit précédemment maintient, au moyen du vérin V1, le siège 12 en position horizontal vis-à-vis de l'effet de tangage de la plateforme 11 ; le second asservissement, suivant un axe transversal, maintient, au moyen d'un vérin V3, non représenté, le siège en position horizontal vis-à-vis de l'effet de roulis de la plateforme 11. L'asservissement sera avantageusement du même type que celui décrit précédemment en relation avec le vérin V1.

Selon une autre variante de l'invention, la pluralité de capteurs définie ci-dessus pourra comprendre en outre une caméra de prise de vue dirigée vers le sol associée à un module de traitement en temps réel de l'image visualisée. Cet ensemble, comportant la caméra et le module de traitement pourra, par l'intermédiaire du calculateur à bord du véhicule, asservir le mouvement des moto-réducteurs M11, M12, d'entraînement des bandes de roulement BR11, BR12, de manière à corriger la trajectoire du véhicule durant le franchissement d'un escalier, voire contrôler en temps réel le franchissement d'un escalier courbe.

Selon une autre variante de l'invention, la pluralité de capteurs définie ci-dessus pourra comprendre en outre une caméra de prise de vue orientable associée à un écran de visualisation permettant à l'utilisateur du véhicule de mieux apprécier la nature et les dimensions des obstacles devant être franchis de manière à améliorer son autonomie tout en garantissant sa sécurité.

## Revendications

1. Véhicule roulant automoteur (1), apte à rouler aussi bien sur sol plat que sur terrain accidenté, comprenant deux bandes de roulement motrices (BR11, BR12) supportées par deux galets (R11, R12) situés à l'avant du véhicule et deux galets situés à l'arrière du véhicule ainsi que deux couples de roues avant (R61, R62) et arrière (R21, R22) dont au moins le couple arrière est moteur, chacune de ces roues du couple moteur étant montée sur un bras oscillant (B21) pouvant basculer autour d'un axe (Δ3) parallèle à l'axe (Δ2) de la roue et perpendiculaire à l'axe longitudinal (Δ) de la bande de roulement (BR11), chacun des bras oscillants (B21, B22) des roues arrière (R21, R22) du susdit couple moteur étant solidaire d'un actionneur (V2) conçu de manière à disposer lesdites roues dans une position basse dans laquelle l'aire d'appui des roues est située au-dessous de l'aire d'appui des bandes de roulement de sorte que les roues à elles seules assurent la motricité dudit véhicule roulant et une position haute dans laquelle l'aire d'appui des bandes de roulement est en contact avec le sol, **caractérisé en ce que** ledit actionneur est conçu de manière à ce qu'en position haute l'aire d'appui des roues motrices tangente la surface d'appui de la bande de roulement et puisse demeurer en contact avec le sol et que la motricité du véhicule résulte de la combinaison des effets de la bande de roulement et desdites roues motrices,
et **en ce qu'**il comprend un automate prenant en compte des informations issues de capteurs de position, de proximité et d'inclinaison, et agissant sur les moto-réducteurs (M21, M22) actionnant les roues arrière (R21, R22), sur les moto-réducteurs (M11, M12), actionnant les bandes de roulement (BR11, BR12), sur le vérin électrique (V2) actionnant les bras (B21, B22), sur le moto-réducteur (M5) actionnant le mouvement de translation des roues avant (R61, R62), et sur le vérin électrique (V1) actionnant le siège (12) de manière à permettre l'exécution, en marche arrière, lors de la montée d'un escalier, d'une transition entre un sol horizontal et la première marche de l'escalier, comportant les étapes suivantes :
• positionnement du véhicule en butée contre la première marche,
• remontée des roues avant (R61) et arrière (R21),
• mise en appui sur le sol de la bande de roulement (BR11),
• mise en appui de la roue arrière (R21) avec le plan horizontal de la première marche,
• mise en marche simultanée de la bande de roulement (BR11) et de la roue arrière (R21),
la surface d'appui de la roue arrière (R21), en position haute, tangentant la surface d'appui définie par la bande de roulement (BR11), de manière à coopérer au mouvement de franchissement de la première marche de l'escalier.

2. Véhicule roulant automoteur (1) selon la revendication 1, **caractérisé en ce que** le susdit automate est conçu de manière à assurer l'exécution, en marche avant, lors de la descente d'un escalier d'une transition entre le sol et la première marche de l'escalier comportant les étapes suivantes :
• positionnement du véhicule au niveau du rebord de la première marche,
• remontée de la roue avant (R61),
• mise en appui sur le sol de la bande de roulement (BR11),
• mise en appui de la roue arrière (R21) avec le plan horizontal du sol correspondant à la surface supérieure de la première marche,
• mise en marche de la bande de roulement (BR11) et, éventuellement, de la roue arrière (R21),
la surface d'appui de la roue arrière (R21), en position haute, tangentant la surface d'appui définie par la bande de roulement (BR11), de manière à coopérer au mouvement de franchissement des premières marches de l'escalier.

3. Véhicule roulant automoteur (1) selon l'une des revendications 1 et 2, **caractérisé en ce que** le susdit automate est en outre conçu de manière à exécuter, en marche avant, lors de la descente d'un escalier, une transition entre la dernière marche de l'escalier et le sol, comportant les étapes suivantes :
• mise en appui sur le sol horizontal (S) de la bande de roulement (BR11),
• mise en appui de la roue arrière (R21) sur le plan horizontal correspondant à la surface supérieure de la dernière marche puis du sol horizontal (S),
• abaissement de la roue avant (R61) pour prendre appui sur le sol horizontal (S),
• arrêt de l'entraînement de la bande de roulement,
• mise en marche de la roue arrière (R21),
la roue arrière (R21), en position haute, prenant appui sur le rebord de la dernière marche puis venant progressivement en appui sur le sol, de manière à coopérer au mouvement de franchissement des dernières marches de l'escalier.

4. Véhicule roulant automoteur (1) selon l'une des revendications précédentes,
**caractérisé en ce que** le susdit automate est en outre conçu de manière à exécuter en marche avant, lors du franchissement d'un obstacle de faible hauteur, une transition entre le sol amont et le sol aval dudit obstacle, comportant les étapes suivantes :
• positionnement du véhicule au niveau de l'obstacle,
• remontée de la roue avant (R61),
• mise en appui sur le sol horizontal (S), en amont de l'obstacle, de la bande de roulement (BR11),
• entraînement de la bande de roulement (BR11),
• franchissement de l'obstacle grâce à la motricité de la bande de roulement (BR11),
• mise en appui de la bande de roulement (BR11) sur le sol horizontal (S), en aval de l'obstacle,
• mise en appui de la roue arrière (R21) sur le sol horizontal (S), en aval de l'obstacle,
• abaissement de la roue avant (R61) pour prendre appui sur le sol horizontal (S), en aval de l'obstacle,
• arrêt de l'entraînement de la bande de roulement (BR11),
• mise en marche de la roue arrière (R21),
la roue arrière (R21), en position basse, prenant appui sur le sol horizontal (S), en amont de l'obstacle, puis venant progressivement en appui sur le sol horizontal (S), en aval de l'obstacle, de manière à coopérer au mouvement de franchissement de l'obstacle.

5. Véhicule roulant automoteur (1) selon la revendication 1, **caractérisé en ce que** les roues avant (R61, R62) sont supportées par des chapes (C61, C62), lesquelles sont solidaires de dispositifs (D61, D62) permettant au moyen d'un arbre d'entraînement (E5) et d'un moto-réducteur électrique (M5), de mouvoir les susdites chapes (C61, C62) dans un plan vertical.

6. Véhicule roulant automoteur (1) selon la revendication 1, **caractérisé en ce que** les deux couples de roues avant (R61, R62) et arrière (R21, R22) sont disposées dans une position très basse de manière à réduire l'empattement entre les susdits couples de roues avant (R61, R62) et arrière (R21, R22).

7. Véhicule roulant automoteur (1) selon la revendication 1, **caractérisé en ce que** les bandes de roulement (BR11, BR12) sont supportées respectivement par des galets (R11, R11') et par des galets (R12, R12').

8. Véhicule roulant automoteur (1) selon la revendication 7, **caractérisé en ce que** les galets (R11, R11') et les galets (R12, R12') sont motorisés respectivement par les moto-réducteurs (M11, M12).

9. Véhicule roulant automoteur (1) selon la revendication 7, **caractérisé en ce que** la distance qui sépare les galets (R11, R11') d'une part, et les galets (R12, R12') d'autre part, est variable de sorte que les susdites bandes de roulement (BR11, BR12) sont en appui sur une surface d'appui variable.

10. Véhicule roulant automoteur (1) selon la revendication 1, **caractérisé en ce que** les roues arrière (R21, R22) sont entraînées par des moto-réducteurs électriques respectivement (M21, M22).

11. Véhicule roulant automoteur (1) selon la revendication 1, **caractérisé en ce qu'**un siège (12) est orientable autour d'un axe (Δ4), perpendiculaire à l'axe longitudinal (Δ) et est actionné par un vérin électrique (V1).

12. Véhicule roulant automoteur (1) selon la revendication 1, **caractérisé en ce qu'**il comprend :
- un module de puissance pour commander les moto-réducteurs (M11, M12) d'entraînement des bandes de roulement (BR11, BR12),
- un module de puissance pour commander le vérin électrique (V2) d'entraînement des bras (B21, B22),
- un module de puissance pour commander le moto-réducteur (M5) de déplacement des roues avant (R61, R62),
- un module de puissance pour commander le vérin électrique (V1) de déplacement du siège (12),
- une pluralité de capteurs de proximité, de distance au sol, d'inclinaison de la plateforme, et de position des roues par rapport à la plateforme,
- un commutateur de choix de fonctions automatisées : "montée escalier", "descente escalier", "sol plat", "sol pierreux", "obstacle", "arrêt d'urgence",
- un calculateur prenant en compte la fonction choisie par l'utilisateur du véhicule et les informations issues des différents capteurs et pilotant en temps réel les différents modules de puissance.

13. Véhicule roulant automoteur (1) selon la revendication 1, **caractérisé en ce qu'**il comprend au moins un asservissement en position horizontale du siège (12) comportant :
- une première boucle d'asservissement du vérin comprenant dans l'ordre : le vérin électrique (V1) ou le vérin électrique (V3), un capteur incrémental d'élongation du vérin (CA1), un correcteur, de type PID (proportionnelle, intégrale, dérivée) (C1), et un sommateur (Σ1),
- une seconde boucle d'asservissement du vérin électrique (V1) ou du vérin (V3) comprenant dans l'ordre, en sortie de ladite première boucle : un module de fonction de transfert (FT1), un capteur d'inclinaison (CA2), un sommateur (Σ2), un correcteur de type PID (C2) et un module de fonction de transfert (FT2) dont la sortie est reliée à l'entrée du sommateur (Σ1) de la première boucle,
- un afficheur de consigne d'inclinaison (A) connecté à l'entrée du sommateur (Σ2) de ladite seconde boucle d'asservissement.

14. Véhicule roulant automoteur (1) selon la revendication 12, **caractérisé en ce que** la pluralité de capteurs comprend en outre une caméra de prise de vue dirigée vers le sol associée à un module de traitement en temps réel de l'image visualisée permettant, par l'intermédiaire du calculateur à bord du véhicule (1), d'asservir le mouvement des moto-réducteurs (M11, M12), d'entraînement des bandes de roulement (BR11, BR12), de corriger la trajectoire du véhicule (1) durant le franchissement d'un escalier, voire de contrôler en temps réel le franchissement d'un escalier courbe.

15. Véhicule roulant automoteur (1) selon la revendication 12, **caractérisé en ce que** la pluralité de capteurs comprend en outre une caméra de prise de vue orientable associée à un écran de visualisation permettant à l'utilisateur du véhicule (1) de mieux apprécier la nature et les dimensions des obstacles devant être franchis.

## Claims

1. Self-propelled rolling vehicle (1), capable of being driven on both flat and rough floors, comprising two driving treads (BR11, BR12) that are supported by two castors (R11, R12) located at the front of the vehicle and two castors located at the back of the vehicle as well as two pairs of front (R61, R62) and rear (R21, R22) wheels, of which at least the rear pair drives, wherein each of these wheels of the driving pair is mounted on a swing arm (B21) that can pivot around an axis (Δ3) parallel to the axis (Δ2) of the wheel and perpendicular to the longitudinal axis (Δ) of the tread (BR11), wherein each of the swing arms (B21, B22) of the rear wheels (R21, R22) of said driving pair are stationary with respect to an actuator (V2) designed so as to position said wheels in a lowered position in which the wheel contact zone is positioned beneath the contact zone of the treads so that the wheels alone provide the driveability of said rolling vehicle and a raised position in which the contact zone of the treads is in contact with the floor, **characterised in that** said actuator is designed so that in the raised position the contact zone of the driving wheels is at a tangent to the contact surface of the tread and can remain in contact with the floor and that the driveability of the vehicle results from the combination of the effects of the tread and said driving wheels,
and **in that** it comprises a programmable logic controller which takes account of the information emitted by the position, proximity and slope sensors, and acts on the geared reducers (M21, M22) which actuate the rear wheels (R21, R22) on the geared reducers (M11, M12) which actuate the treads (BR11, BR12) on the electric actuator (V2) which actuates the arms (B21, B22), on the geared reducer (M5) which actuates the translation movement of the front wheels (R61, R62), and on the electric actuator (V1) which actuates the seat (12) so as to make possible the transition, in reverse when going up stairs, between a horizontal floor and the first step of the stairs, comprising the following steps:
- positioning of the vehicle against the first step,
- raising of the front (R61) and rear (R21) wheels,
- bringing the tread (BR11) into contact with the floor,
- bringing the rear wheel (R21) into contact with the horizontal plane of the first step,
- simultaneously moving the tread (BR11) and the rear wheel (R21),
wherein the contact zone of the rear wheel (R21), in the raised position, is at a tangent to the contact zone defined by the tread (BR11), so that it is involved in the movement to climb the first step of the stairs.

2. Self-propelled rolling vehicle (1) according to claim 1, **characterised in that** the above-mentioned programmable logic controller is designed so as to make possible the transition, moving forwards when going down stairs, between the floor and the first step of the stairs, comprising the following steps:
- positioning of the vehicle on the edge of the first step,
- raising of the front (R61) wheel,
- bringing the tread (BR11) into contact with the floor,
- bringing the rear wheel (R21) into contact with the horizontal plane of the floor corresponding to the upper zone of the first step,
- moving the tread (BR11) and possibly the rear wheel (R21),
wherein the contact zone of the rear wheel (R21), in the raised position, is at a tangent to the contact zone defined by the tread (BR11), so that it is involved in the movement to climb down the first steps of the stairs.

3. Self-propelled rolling vehicle (1) according to any of claims 1 or 2, **characterised in that** the above-mentioned programmable logic controller is further designed so as to make possible the transition, moving forwards when going down stairs, between the last step of the stairs and the floor, comprising the following steps:
- bringing the tread (BR11) into contact with the horizontal floor (S),
- bringing the rear wheel (R21) into contact with the horizontal plane corresponding to the upper zone of the last step then the floor (S),
- lowering of the front wheel (R61) so that it comes into contact with the horizontal floor (S),
- stopping the drive to the tread,
- moving the rear wheel (R21),
wherein the rear wheel (R21), in the raised position, is in contact with the edge of the last step and then progressively comes into contact with the floor, so that it is involved in the movement to climb down the last steps of the stairs.

4. Self-propelled rolling vehicle (1) according to any of the previous claims, **characterised in that** the above-mentioned programmable logic controller is further designed so as to make possible, when moving forwards and clearing a low obstacle, the transition between the floor in front of and the floor behind said obstacle, comprising the following steps:
- positioning of the vehicle next to the obstacle,
- raising of the front (R61) wheel,
- bringing the tread (BR11) into contact with the horizontal floor (S) in front of the obstacle,
- driving the tread (BR11),
- clearing the obstacle by means of the driveability of the tread (BR11),
- bringing the tread (BR11) into contact with the horizontal floor (S) behind the obstacle,
- bringing the rear wheel (R21) into contact with the horizontal floor (S) behind the obstacle,
- lowering the front wheel (R61) into contact with the horizontal floor (S) behind the obstacle,
- stopping the drive to the tread (BR11),
- moving the rear wheel (R21),
wherein the rear wheel (R21), in the lowered position, comes into contact with the horizontal floor (S) in front of the obstacle then progressively comes into contact which the horizontal floor (S) behind the obstacle, so that it is involved in the movement of clearing over the obstacle.

5. Self-propelled rolling vehicle (1) according to claim 1, **characterised in that** the front wheels (R61, R62) are supported by forks (C61, C62) which are stationary to devices (D61, D62) which permit by means of a drive shaft (E5) and an electric geared reducer (M5) to move said forks (C61, C62) in a vertical plane.

6. Self-propelled rolling vehicle (1) according to claim 1, **characterised in that** the two pairs of front (R61, R62) and rear (R21, R22) wheels are placed in a very low position so as to reduce the wheelbase between said pairs of front (R61, R62) and rear (R21, R22) wheels.

7. Self-propelled rolling vehicle (1) according to claim 1, **characterised in that** the treads (BR11, BR12) are respectively supported by castors (R11, R11') and castors (R12, R12').

8. Self-propelled rolling vehicle (1) according to claim 7, **characterised in that** the castors (R11, R11') and the castors (R12, R12') are respectively driven by the geared reducers (M11, M12).

9. Self-propelled rolling vehicle (1) according to claim 7, **characterised in that** the distance which separates the castors (R11, R11') from the castors (R12, R12') is variable so that above-mentioned said treads (BR11, BR12) are in contact with a variable contact zone.

10. Self-propelled rolling vehicle (1) according to claim 1, **characterised in that** the rear wheels (R21, R22) are respectively driven by electric geared reducers (M21, M22).

11. Self-propelled rolling vehicle (1) according to claim 1, **characterised in that** a seat (12) can be orientated around an axis (Δ4) perpendicular to the longitudinal axis (Δ) and is actuated by an electric actuator (V1).

12. Self-propelled rolling vehicle (1) according to claim 1, **characterised in that** it comprises:
- a power module to control the geared reducers (M11, M12) which drive the treads (BR11, BR12),
- a power module to control the electric actuator (V2) which drives the arms (B21, B22),
- a power module to control the geared reducer (M5) which moves the front wheels (R61, R62),
- a power module to control the electric actuator (V1) which moves the seat (12),
- a plurality of proximity, distance from the floor, platform tilt and wheel position with respect to the platform sensors,
- a switch for selecting automated functions: "climb stairs", "go down stairs", "flat floor", "rough floor", "obstacle", "emergency stop",
- a computer which takes into account the function selected by the vehicle user and the information from the various sensors and which controls the various power modules in real time.

13. Self-propelled rolling vehicle (1) according to claim 1, **characterised in that** it comprises at least one power assistance in the horizontal position of the seat (12) comprising:
- a first power assistance circuit of the actuator comprising in this order: the electric actuator (V1) or the electric actuator (V3), an incremental sensor for the elongation of the actuator (CA1), a corrector of the PID (proportional, integral, derived) type (C1) and a summing element (Σ1),
- a second power assistance circuit of the electric actuator (V1) or the electric actuator (V3), comprising in this order at the output of said first circuit: a transfer function module (FT1), a tilt sensor (CA2), a summing element (Σ2), a PID type corrector (C2) and a transfer function module (FT2) whose output is connected to the input of the summing element (Σ2) of the first circuit,
- a display unit for the tilt setting (A) connected to the input of the summing element (Σ2) of said second power assistance circuit.

14. Self-propelled rolling vehicle (1) according to claim 12, **characterised in that** the plurality of sensors further comprises a camera directed towards the floor associated to a real time image processing module which permits, via the computer on-board the vehicle (1), to power assist the movement of the geared reducers (M11, M12) which drive the treads (BR11, BR12), to correct the trajectory of the vehicle (1) when climbing stairs, or even to control in real time the climbing of curved stairs.

15. Self-propelled rolling vehicle (1) according to claim 12, **characterised in that** the plurality of sensors further comprises a camera directed towards the floor associated to a viewing screen which permits the user of the vehicle (1) to better appreciate the nature and dimensions of the obstacles to be cleared.

## Patentansprüche

1. Motorisiertes Fahrzeug mit Rädern (1), das zum Fahren über ebenen Boden ebenso wie über unebenes Gelände ausgelegt ist, umfassend zwei motorbetriebene Laufbänder (BR11, BR12), die von zwei vor dem Fahrzeug angeordneten Rollen (R11, R12) und von zwei hinter dem Fahrzeug angeordneten Rollen sowie von zwei Paaren von Vorderrädern (R61, R62) und Hinterrädern (R21, R22) getragen werden, wovon mindestens das hintere Paar motorisch ist, wobei jedes dieser Räder des motorischen Paares auf einem Lenkstab (B21) montiert ist, der um eine Achse (Δ3) kippen kann, die zur Achse (Δ2) des Rads parallel ist und zur Längsachse (Δ) des Laufbands (BR11) senkrecht ist, wobei jeder der Lenkstäbe (B21, B22) der Hinterräder (R21, R22) des oben genannten motorischen Paares mit einem Auslöser (V2) aus einem Stück besteht, der dazu ausgelegt ist, die Räder in einer tiefliegenden Position, in der die Auflagefläche der Räder unterhalb der Auflagefläche der Laufbänder liegt, derart, dass die Räder von sich aus die Bewegungsfähigkeit des Fahrzeugs mit Rädern sicher stellen, und in einer hochliegenden Position, in der die Auflagefläche der Laufbänder mit dem Boden in Kontakt ist, anzuordnen, **dadurch gekennzeichnet, dass** der Auslöser so ausgelegt ist, dass in der hochliegenden Position die Lauffläche der motorischen Räder die Lauffläche des Laufbands tangieren und mit dem Boden in Kontakt bleiben können und dass die Bewegungsfähigkeit des Fahrzeugs das Ergebnis der Kombination der Wirkungen des Laufbands und der motorischen Räder ist,
und **dadurch**, dass es einen Automaten umfasst, der Informationen berücksichtigt, die von Positionssensoren für Nähe und Neigung ausgegeben werden, und der auf die Getriebemotoren (M21, M22), die die Hinterräder (R21, R22) antreiben, auf die Getriebemotoren (M11, M12), die die Laufbänder (BR11, BR12) antreiben, auf den elektrischen Zylinder (V2), der die Stäbe (B21, B22) antreibt, auf den Getriebemotor (M5), der die translatorische Bewegung der Vorderräder (R61, R62) antreibt, auf den elektrischen Zylinder (V1), der den Sitz (12) so betreibt, dass die Ausführung, im Rückwärtsgang, beim Besteigen einer Treppe, eines Übergangs zwischen einem horizontalen Boden und der ersten Stufe der Treppe ermöglicht wird, wirkt, umfassend die folgenden Schritte:
• Positionierung des Fahrzeugs am Anschlag an der ersten Stufe,
• Anheben der Vorder- (R61) und Hinterräder (R21),
• Aufsetzen des Laufbands (BR11) auf den Boden,
• Aufsetzen des Hinterrads (R21) auf die horizontale Ebene der ersten Stufe,
• gleichzeitiges in Bewegung setzen des Laufbands (BR11) und des Hinterrads (R21),
wobei die Auflagefläche des Hinterrads (R21), in der hochliegenden Position, die von dem Laufband (BR11) definierte Auflagefläche tangiert, derart, dass mit der Überschreitungsbewegung der ersten Stufe der Treppe ein Zusammenspiel besteht.

2. Motorisiertes Fahrzeug mit Rädern (1) nach Anspruch 1,
**dadurch gekennzeichnet, dass** der oben genannte Automat so ausgelegt ist, dass die Ausführung, im Vorwärtsgang, während des Abstiegs einer Treppe eines Übergangs zwischen dem Boden und der ersten Stufe der Treppe sicher gestellt ist, umfassend die folgenden Schritte:
• Positionierung des Fahrzeugs an der Kante der ersten Stufe,
• Anheben der Vorderrads (R61),
• Aufsetzen auf den Boden des Laufbands (BR11)
• Aufsetzen des Hinterrads (R21) auf die horizontale Ebene des Bodens entsprechend der höher gelegenen Oberfläche der ersten Stufe,
• in Bewegung setzen des Laufbands (BR11) und, gegebenenfalls, des Hinterrads (R21),
wobei die Auflagefläche des Hinterrads (R21), in der hochliegenden Position, die Auflagefläche tangiert, die durch das Laufband (BR11) definiert ist, derart, dass mit der Überschreitungsbewegung der ersten Stufen der Treppe ein Zusammenspiel besteht.

3. Motorisiertes Fahrzeug mit Rädern (1) nach einem der Ansprüche 1 und 2,
**dadurch gekennzeichnet, dass** der oben genannte Automat weiterhin so ausgelegt ist, dass, im Vorwärtsgang, während des Abstiegs einer Treppe, ein Übergang zwischen der letzten Stufe der Treppe und dem Boden ausgeführt wird, umfassend die folgenden Schritte:
• Aufsetzen des Laufbands (BR11) auf den horizontalen Boden (S),
• Aufsetzen des Hinterrads (R21) auf die horizontale Ebene entsprechend der höher gelegenen Oberfläche der letzten Stufe und dann dem horizontalen Boden (S),
• Absenken des Vorderrads (R61) zum Aufsetzen auf den horizontalen Boden (S),
• Anhalten des Antriebs des Laufbands,
• in Bewegung setzen des Hinterrads (R21),
wobei sich das Hinterrad (R21), in der hochliegenden Position, auf der Kante der hinteren Stufe abstützt und dann nach und nach auf den Boden aufsetzt, derart, dass mit der Überschreitungsbewegung der letzten Stufen der Treppe ein Zusammenspiel besteht.

4. Motorisiertes Fahrzeug mit Rädern (1) nach einem der vorhergehenden Ansprüche,
**dadurch gekennzeichnet, dass** der oben genannte Automat weiterhin so ausgelegt ist, dass er, im Vorwärtsgang, während des Überschreitens eines Hindernisses von geringer Höhe, eine Übergang zwischen dem vorgeschalteten Boden und dem nachgeschalteten Boden des Hindernisses ausführt, umfassend die folgenden Schritte:
• Positionieren des Fahrzeugs an dem Hindernis,
• Anheben des Vorderrads (R61),
• Aufsetzen des Laufbands (BR11) auf den horizontalen Boden (S), dem Hindernis vorgeschaltet,
• Antreiben des Laufbands (BR11),
• Überschreiten des Hindernisses auf Grund der Bewegungsfähigkeit des Laufbands (BR11),
• Aufsetzen des Laufbands (BR11) auf den horizontalen Boden (S), dem Hindernis nachgeschaltet,
• Aufsetzen des Hinterrads (R21) auf den horizontalen Boden (S), dem Hindernis nachgeschaltet,
• Absenken des Vorderrads (R61) zum Aufsetzen auf den horizontalen Boden (S), dem Hindernis nachgeschaltet,
• Anhalten der Antriebs des Laufbands (BR11),
• in Bewegung setzen des Hinterrads (R21),
wobei sich das Hinterrad (R21), in der tiefliegenden Position, auf dem horizontalen Boden (S), dem Hindernis vorgeschaltet, abstützt und dann nach und nach auf den horizontalen Boden (S), dem Hindernis nachgeschaltet, aufsetzt, derart, dass mit der Überschreitungsbewegung des Hindernisses ein Zusammenspiel besteht.

5. Motorisiertes Fahrzeug mit Rädern (1) nach Anspruch 1,
**dadurch gekennzeichnet, dass** die Vorderräder (R61, R62) von Gabeln (C61, C62) getragen werden, die aus einem Stück bestehen mit den Vorrichtungen (D61, D62), durch die sich mittels einer Antriebswelle (E5) und eines elektrischen Getriebemotors (M5) die oben genannten Gabeln (C61, C62) in einer vertikalen Ebene bewegen lassen.

6. Motorisiertes Fahrzeug mit Rädern (1) nach Anspruch 1,
**dadurch gekennzeichnet, dass** die beiden Paare von Vorder- (R61, R62) und Hinterrädern (R21, R22) in einer sehr tiefliegenden Position angeordnet sind, derart, dass der Radstand zwischen den oben genannten Paaren von Vorder- (R61, R62) und Hinterrädern (R21, R22) reduziert ist.

7. Motorisiertes Fahrzeug mit Rädern (1) nach Anspruch 1,
**dadurch gekennzeichnet, dass** die Laufbänder (BR11, BR12) von Rollen (R11, R11') bzw. von Rollen (R12, R12') getragen werden.

8. Motorisiertes Fahrzeug mit Rädern (1) nach Anspruch 7,
**dadurch gekennzeichnet, dass** die Rollen (R11, R11') bzw. die Rollen (R12, R12') durch die Getriebemotoren (M11, M12) motorisiert sind.

9. Motorisiertes Fahrzeug mit Rädern (1) nach Anspruch 7,
**dadurch gekennzeichnet, dass** der Abstand, der die Rollen (R11, R11') einerseits, und die Rollen (R12, R12') andererseits trennt, variabel ist, derart, dass die oben genannten Laufbänder (BR11, BR12) auf einer variablen Auflagefläche aufliegen.

10. Motorisiertes Fahrzeug mit Rädern (1) nach Anspruch 1,
**dadurch gekennzeichnet, dass** die Hinterräder (R21, R22) von elektrischen Getriebemotoren (M21, M22) angetrieben werden.

11. Motorisiertes Fahrzeug mit Rädern (1) nach Anspruch 1,
**dadurch gekennzeichnet, dass** ein Sitz (12) um eine Achse (Δ4) senkrecht zur Längsachse (Δ) ausrichtbar ist und durch einen elektrischen Zylinder (V1) betätigt wird.

12. Motorisiertes Fahrzeug mit Rädern (1) nach Anspruch 1,
**dadurch gekennzeichnet, dass** es folgendes umfasst:
- ein Leistungsmodul, um die Getriebemotoren (M11, M12) für den Antrieb der Laufbänder (BR11, BR12) zu steuern,
- ein Leistungsmodul, um den elektrischen Zylinder (V2) für den Antrieb der Stäbe (B21, B22) zu steuern,
- ein Leistungsmodul, um den Getriebemotor (M5) für die Verschiebung der Vorderräder (R61, R62) zu steuern,
- ein Leistungsmodul, um den elektrischen Zylinder (V1) für die Verschiebung des Sitzes (12) zu steuern,
- eine Vielzahl von Sensoren für Proximität, Abstand zum Boden, Neigung der Plattform und Position der Räder bezüglich der Plattform,
- einen Wahlschalter für automatisierte Funktionen: "Treppen-Aufstieg", "Treppen-Abstieg", "ebener Boden", "steiniger Boden", "Hindernis", "Nothalt",
- einen Rechner, der die vom Anwender des Fahrzeugs gewählte Funktion und die Informationen, die von den verschiedenen Sensoren ausgegeben werden, berücksichtigt und der in Realzeit die verschiedenen Leistungsmodule einschaltet.

13. Motorisiertes Fahrzeug mit Rädern (1) nach Anspruch 1,
**dadurch gekennzeichnet, dass** es mindestens einen Horizontalpositionsregler des Sitzes (12) umfasst, umfassend:
- eine erste Regelungsschleife des Zylinders, der, in der folgenden Reihenfolge, folgendes umfasst: den elektrischen Zylinder (V1) oder den elektrischen Zylinder (V3), einen Inkrement-Sensor der Ausdehnung des Zylinders (CA1), einen Kompensator vom Typ PID (proportional, Integral, Ableitung) (C1), einen Summator (Σ1),
- eine zweite Regelungsschleife des elektrischen Zylinders (V1) oder des Zylinders (V3), umfassend, in der folgenden Reihenfolge, am Ausgang der ersten Schleife: ein Transferfunktionsmodul (FT1), einen Neigungssensor (CA2), einen Summator (Σ2), einen Kompensator vom Typ PID (C2) und ein Transferfunktionsmodul (FT2), dessen Ausgang mit dem Eingang des Summators (Σ1) der ersten Scheife verbunden ist,
- einen Neigungsollwert-Einsteller (A), der mit dem Eingang des Summator (Σ2) der zweiten Regelungsscheife verbunden ist.

14. Motorisiertes Fahrzeug mit Rädern (1) nach Anspruch 12,
**dadurch gekennzeichnet, dass** die Vielzahl von Sensoren weiterhin eine Sichtaufnahmekamera umfasst, die auf den Boden gerichtet ist und mit einem Realzeit-Verarbeitungsmodul des sichtbar gemachten Bildes kombiniert ist, durch das sich über den Rechner an Bord des Fahrzeugs (1) die Bewegung der Getriebemotoren (M11, M12) steuern lässt, sich die Laufbänder (BR11, BR12) antreiben lassen, die Trajektorie des Fahrzeuges (1) während der Überwindung einer Treppe korrigieren lässt, sich sogar in Realzeit die Überwindung einer kurvigen Treppe kontrollieren lässt.

15. Motorisiertes Fahrzeug mit Rädern (1) nach Anspruch 12,
**dadurch gekennzeichnet, dass** die Vielzahl von Sensoren weiterhin eine Sichtaufnahmekamera umfasst, die es dem Anwender des Fahrzeugs (1) in Verbindung mit einem Bildschirm möglich macht, die Natur und die Dimensionen der Hindernisse besser abzuschätzen, die überwunden werden müssen.
